# EUROPÄISCHE PATENTSCHRIFT

(11) **EP 1 545 940 B1**
(45) Veröffentlichungstag und Bekanntmachung des Hinweises auf die Patenterteilung: **26.07.2006**
(21) Anmeldenummer: 03714676.8
(22) Anmeldetag: 04.03.2003
(51) Int. Cl.: B60R 21/01

(54) **ANORDNUNG ZUM ANSTEUERN VON RÜCKHALTEMITTELN**
ARRANGEMENT FOR CONTROLLING RETAINING MEANS
DISPOSITIF PERMETTANT DE COMMANDER DES MOYENS DE RETENUE

(30) Priorität: 23.09.2002 DE 10244095
(43) Veröffentlichungstag der Anmeldung: 29.06.2005
(73) Patentinhaber: ROBERT BOSCH GMBH, 70442 Stuttgart (DE)
(72) Erfinder: STUETZLER, Frank-Juergen, 48331 Farmington Hills (US)
(86) Internationale Anmeldenummer: PCT/DE2003/000696
(87) Internationale Veröffentlichungsnummer: WO 2004/028867

(56) Entgegenhaltungen:
- EP-A- 0 987 151
- DE-A- 10 010 905
- DE-A- 19 955 559

## Beschreibung

### Stand der Technik

Die Erfindung geht aus von einer Anordnung zum Ansteuern von Rückhaltemitteln nach der Gattung des unabhängigen Patentanspruchs.

Aus DE 100 10 905 A1 ist es bekannt, dass in Abhängigkeit von einem Signal eines Frontsensors eine Schwellwertumschaltung für ein Signal eines Zentralsensors vorgenommen wird. Aus DE 199 55 559 A (Oberbegriff von Anspruch 1) ist es bekannt, einen zweistufigen Airbag in Abhängigkeit von einem Signal eines Frontsensors eines Zentralsensors anzusteuern. Hier werden Zusammenstoßschwereindices in Abhängigkeit vom Signal des Zentralsensors und des Frontsensors gebildet. Eine Veränderung der Schwellenabhängigkeit vom Zustand des Gurtschlosses ist ebenfalls bekannt. Aus EP 98 7151 A1 ist ein Steuerapparat zur Ansteuerung einer Sicherheitseinrichtung bekannt. Dabei wird ein Zentralsensor und ein peripherer Sensor verwendet. In Abhängigkeit vom Signal des peripheren Sensors wird der Schwellwert für den Zentralsensor verändert.

### Vorteile der Erfindung

Die erfindungsgemäße Anordnung zum Ansteuern von Rückhaltemitteln mit den Merkmalen des unabhängigen Patentanspruchs hat den Vorteil, durch die starke Rolle des Upfrontsensors schnellere Auslösezeiten für die Rückhaltemittel, und zwar sowohl für Gurtstraffer als auch für Airbagstufen, zu erreichen. Dabei ist es insbesondere möglich, einen Airbag mit zwei Stufen gezielt anzusteuern. Diese starke Rolle des Upfrontsensors drückt sich insbesondere dadurch aus, dass nach den Signalen des Upfrontsensors zeitabhängige Schwellen, die zur Ansteuerung der Rückhaltemittel führen, verändert werden. Ein Upfrontsensor ist hier insbesondere von großem Vorteil, da er sehr nahe bei einem Frontcrash am Unfallereignis ist und damit bessere Informationen liefert, als üblicherweise ein Sensor, der lediglich im zentral angeordneten Steuergerät angeordnet ist.

Durch die in den abhängigen Ansprüchen aufgeführten Maßnahmen und Weiterbildungen sind vorteilhafte Verbesserungen der im unabhängigen Patentanspruch angegebenen Anordnung zum Ansteuern von Rückhaltemitteln möglich.

Besonders vorteilhaft ist, dass hier lediglich Geschwindigkeitssignale oder gefilterte Beschleunigungssignale verwendet werden. Durch die Integration bzw. Filterung liegt eine Glättung vor, die zu einer besseren Aussagekraft der Signale führt.

Bei der Filterung werden hier insbesondere niederfrequente Signale verwendet, d.h. dass eine maximale Grenzfrequenz von 100 Hz zur Filterung verwendet wird. Diese Signale sind zuverlässiger als höherfrequente Signale, da die niederfrequenten Signale leichter, insbesondere mit einer Finite-Elementenmethode, simuliert werden können. Die Verwendung einer Finitite-Elementesimulation kann in der Prototypphase einer Automobilentwicklung signifikant Kosten einsparen.

### Zeichnung

Ausführungsbeispiele der Erfindung sind in der Zeichnung dargestellt und werden in der nachfolgenden Beschreibung näher erläutert.

Es zeigen
- Figur 1: ein Blockschaltbild der erfindungsgemäßen Anordnung,
- Figur 2: ein Blockschaltbild eines erfindungsgemäßen Ablaufs,
- Figur 3: ein Geschwindigkeits-Zeit-Diagramm mit einem Beispiel der Funktion der erfindungsgemäßen Anordnung,
- Figur 4: ein zweites Beispiel in einem Geschwindigkeits-Zeit-Diagramm,
- Figur 5: ein weiteres Blockschaltbild zur Illustration des erfindungsgemäßen Ablaufs,
- Figur 6: ein weiteres Blockschaltbild zur Illustration des erfindungsgemäßen Ablaufs und
- Figur 7: ein weiteres Geschwindigkeits-Zeit-Diagramm mit einem Beispiel für den Ablauf, der auf der erfindungsgemäßen Anordnung durchgeführt wird.

### Beschreibung

Rückhaltesysteme bestimmen eine Auslösung bzw. Ansteuerung von Rückhaltemitteln mittels der Beschleunigung, die im Fahrgastraum auf dem Tunnel und mit peripheren Sensoren im Außenbereich, beispielsweise in den B-Säulen, gemessen wird. Dies begrenzt den Einsatz von Finite-Elementensimulationen zur Berechnung der Beschleunigung bei einem Unfall, denn solche Simulationsverfahren haben Probleme, nichtlineare Vorgänge beim Brechen von strukturellen Elementen korrekt zu simulieren. Berechnete Beschleunigungssignale sind deshalb im höherfrequenten Signalbereich oberhalb von typischerweise 100 Hz nicht zuverlässig genug, um sie zur Systemkalibrierung eines Crasherkennungsalgorithmus zu nutzen.

Erfindungsgemäß wird eine Anordnung beschrieben, die auf Grund von gemessenen Geschwindigkeiten bzw. Beschleunigungen die Auslösung von Airbags und Gurtstraffern entscheidet und Ergebnisse liefert, mit denen konventionelle, beschleunigungsbasierte Algorithmen vergleichbar sind. Insbesondere der Einsatz von Frontsensoren, also Upfrontsensoren, die in der Knautschzone eines Fahrzeugs eingebaut sind, ermöglicht einen solchen Einsatz eines geschwindigkeitsbasierten Algorithmus.

Kern der Erfindung ist also, dass die Auslösung der Rückhaltemittel mittels einer gefilterten Beschleunigung, die zu einem geschwindigkeitsähnlichen Signal oder der Geschwindigkeit selbst entschieden wird. Die Geschwindigkeit wird im Fahrgastraum auf dem Tunnel und in der Knautschzone des Fahrzeugs mittels Beschleunigungssensoren gemessen. Der Vorteil ist, dass der Algorithmus mit niederfrequenten Signalen rechnet, die wiederum recht zuverlässig mittels Finite-Elementesimulation berechenbar sind. Dadurch erlaubt diese Erfindung den Einsatz von Finite-Elementensimulation zur Systemkalibrierung von Airbags und Gurtstraffern. Damit können in der Prototypphase einer Automobilentwicklung signifikant Kosten eingespart werden.

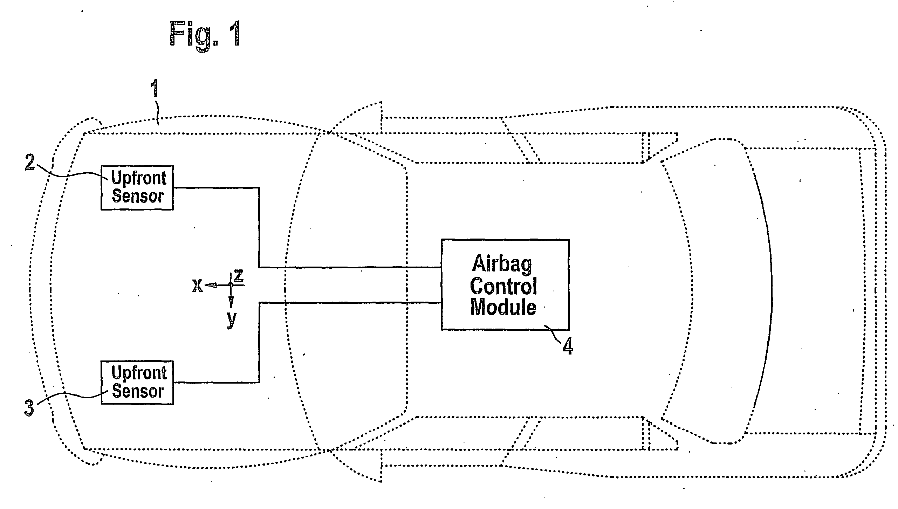

Figur 1 zeigt, dass Sensoren 2 und 3 in einem Fahrzeug in der Knautschzone als Upfrontsensoren eingesetzt sind. Die Sensoren 2 und 3 sind mit einem Steuergerät 4, das Rückhaltemittel ansteuert, verbunden. Das Steuergerät 4 ist zentral im Fahrzeug angeordnet, vorzugsweise auf dem Tunnel. Die Upfrontsensoren 2 und 3 sind üblicherweise auf dem Kühlerquerträger angeordnet und messen die Beschleunigung bei einem Unfall. Aus dieser Beschleunigung wird durch Integration für den jeweiligen Sensor 2 und 3 die Geschwindigkeit bestimmt oder beispielsweise durch Tiefpassfilterung mit einer geeigneten niedrigen Grenzfrequenz von bis zu 100 Hz eine geschwindigkeitsähnliche gefilterte Beschleunigung erzeugt. Diese Geschwindigkeiten und/oder gefilterten Beschleunigungen werden mit Schwellen verglichen. Beim Überschreiten der Schwellen werden logische Signale erzeugt, mit denen andere Schwellen verändert werden. Beim Überschreiten jeweiliger Schwellen und/oder durch Erzeugen eines logischen Signals aus der Kombination der logischen Signale des Überschreitens jeweiliger Schwellen werden die dazugehörigen Rückhaltemittel ausgelöst.

Die Übertragung der Beschleunigungssignale der Upfrontsensoren 2 und 3 zum Steuergerät 4 geschieht üblicherweise digital, vorzugsweise durch eine unidirektionale Leitung, die für jeden Sensor jeweils vorgesehen ist. Alternativ ist der Einsatz eines Sensorbusses hier möglich. Das Steuergerät 4 nimmt selbst die Auswertung der gemessenen Beschleunigung vor, also die Integration bzw. Filterung und den Schwellenvergleich. Dazu weist das Steuergerät 4 üblicherweise einen Mikroprozessor bzw. Mikrocontroller mit einem entsprechenden Speicher auf.

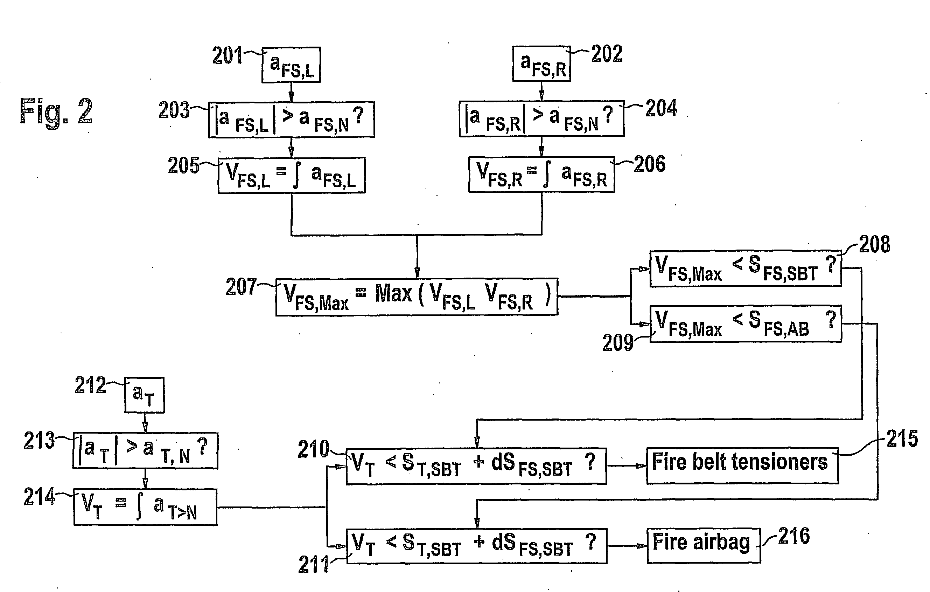

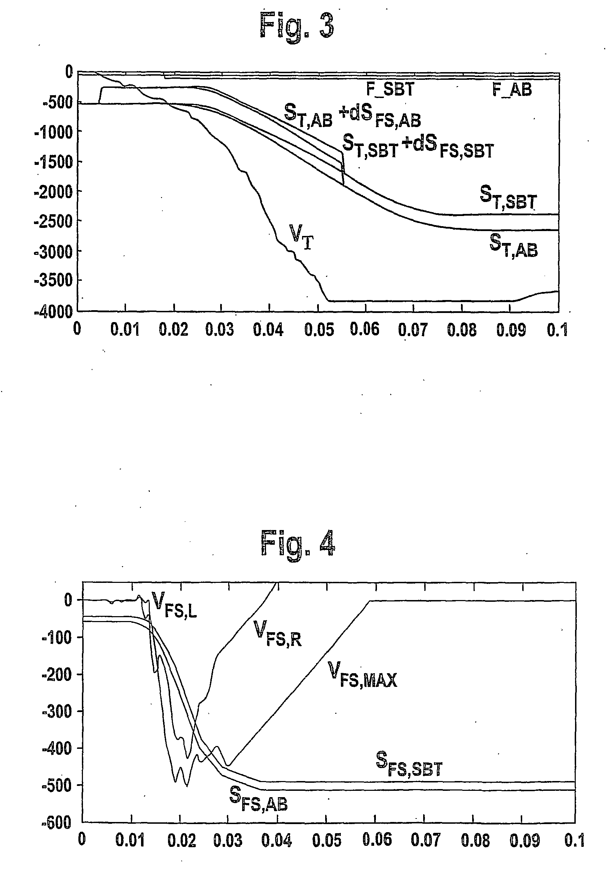

Figur 2 zeigt an einem Blockschaltbild ein Beispiel eines geschwindigkeitsbasierten Algorithmus. In Block 212 wird die auf dem Tunnel gemessene Beschleunigung a_{T} erzeugt. Der Betrag dieser Beschleunigung a_{T} wird im Block 213 mit einer einstellbaren Schwelle a_{T,N} verglichen. Falls der Betrag von a_{T} über dem von a_{T,N} liegt, wird im Block 214 die Geschwindigkeit V_{T} durch Integration von a_{T} erzeugt. Falls der Betrag der gemessenen Beschleunigung a_{T} unterhalb der Schwelle a_{T,N} liegt, wird die Geschwindigkeit V_{T} um einen einstellbaren Betrag a_{T,R} erhöht, bis die Geschwindigkeit V_{T} Null ist. Die im Fahrgastraum auf dem Tunnel gemessene Beschleunigung V_{T} wird in den Blöcken 210 bzw. 211 mit einer zeitabhängigen Schwelle verglichen. Im einfachsten Fall werden bei Unterschreiten der Schwelle die dieser Schwelle entsprechenden Rückhaltemittel ausgelöst. Im Block 210 wird dies beispielsweise für die erste Stufe eines Airbags durchgeführt. Einstellbare Schwellen sind hier mehrfach vorhanden, um entsprechende Rückhaltemittel auszulösen. Daher gibt es im Block 211 eine Schwelle S_{T,SBT}, um Gurtstraffer auszulösen und im Block 210 eine Schwelle S_{T,AB1}, um die erste Stufe des zweistufigen Airbags auszulösen. Figur 3 zeigt Geschwindigkeit V_{T}, Schwellen mit Auslöse-Flags für das Beispiel eines 50 km/h-Frontalaufpralls gegen eine starre Barriere.

Dieser Schwellwertvergleich wird jedoch auch durch die Beschleunigungen der Frontsensoren 2 und 3 bestimmt. In Figur 2 werden in den Blöcken 201 und 202 die Beschleunigung mittels der beiden Upfrontsensoren 2 und 3 a_{FS,L} und a_{FS,R} jeweils gemessen. Diese werden wiederum in den Blöcken 203 und 204 mit einer einstellbaren Schwelle a_{FS,N} verglichen. Liegen sie darüber, wird die Geschwindigkeit durch entsprechende Integration in den Blöcken 205 und 206 bestimmt. Liegen sie unterhalb der Schwelle a_{FS,N}, so wird die Geschwindigkeit V_{FS,L} um einen einstellbaren Betrag a_{FS,Red} so lange erhöht, bis die Geschwindigkeit V_{FS,L} Null ist. Dies gilt für beide Sensorsignale. Im Block 207 wird dann bestimmt, welche der beiden Geschwindigkeiten des rechten und linken Upfrontsensors maximal ist. Das Maximum wird dann in den Blöcken 208 und 209 mit jeweils einstellbaren Schwellen S_{FS,SBT} für den Gurtstraffer und S_{FS,AB} für den Airbag verglichen. Weitere Schwellen können hier vorgesehen sein, entsprechend den vorhandenen Rückhaltemitteln. Unterschreitet die maximale Geschwindigkeit, die durch die Frontsensoren bestimmt wurde, die Schwellen S_{FS,SBT} und S_{FS,AB}, so werden die dazugehörigen Schwellen in den Blöcken 210 und 211 S_{T,SBT} und S_{T,AB} um bestimmte einstellbare Beträge dS_{T,SBT} und dS_{T,AB} erhöht. Auf diese Weise wird die Auslösung der zugehörigen Rückhaltemittel erleichtert. Ein Unterschreiten dieser Schwellen ist dann wahrscheinlicher. Figur 4 zeigt ein Beispiel für Geschwindigkeiten und Schwellen, gemessen auf rechtem und linken Kühlerträger für einen 50 km/h-Frontalaufprall-Unfall gegen eine feste Barriere. Die dadurch bedingten Veränderungen der Auslöseschwellen sind in Figur 3 dargestellt.

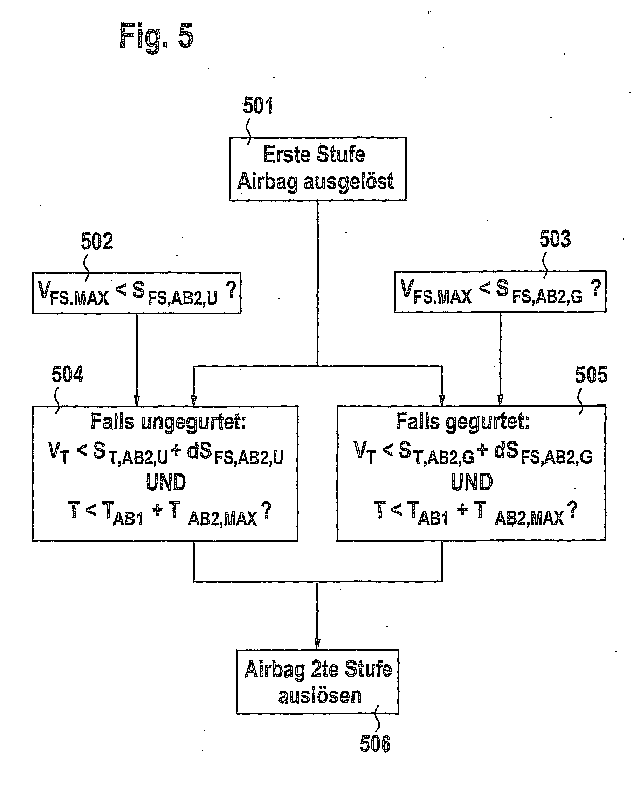

Die Fortsetzung des Algorithmus für die Steuerung der zweiten Stufe von zweistufigen Gasgeneratoren ist im Blockschaltbild in Figur 5 gezeigt. Falls eine Auslösung der ersten Airbagstufe im Block 501 erkannt wurde, so wird die im Fahrgastraum auf dem Tunnel bestimmte Geschwindigkeit V_{T} wiederum mit zeitabhängigen Schwellen S_{T,AB2,U}, S_{T,AB2,G} für nicht gegurtete bzw. angegurtete Insassen verglichen. Falls die Schwellen S_{T,AB2,U} und S_{T,AB2,G} innerhalb einer bestimmten maximalen Zeitverzögerung T_{AB2,max} nach der Auslösung der ersten Stufe überschritten wurde, so wird auf Auslösung der zweiten Stufe für nicht gegurtete bzw. angegurtete Insassen entschieden und die zweite Stufe ausgelöst. In den Blöcken 502 und 503 wird auf gegurtet bzw. ungegurtet erkannt. Im Block 504 wird im ungegurteten Fall der Schwellwertvergleich und die maximale Zeitverzögerung überprüft. Im Block 505 wird dies für den gegurteten Fall durchgeführt. Kommt bei einem der Blöcke 504 bzw. 505 ein Auslösesignal zustande, dann wird in Block 506 die Auslösung der zweiten Stufe vorgenommen. Falls diese maximale Verzögerungszeit überschritten wird, so wird die zweite Stufe nicht mehr vom Unfallerkennungsalgorithmus ausgelöst.

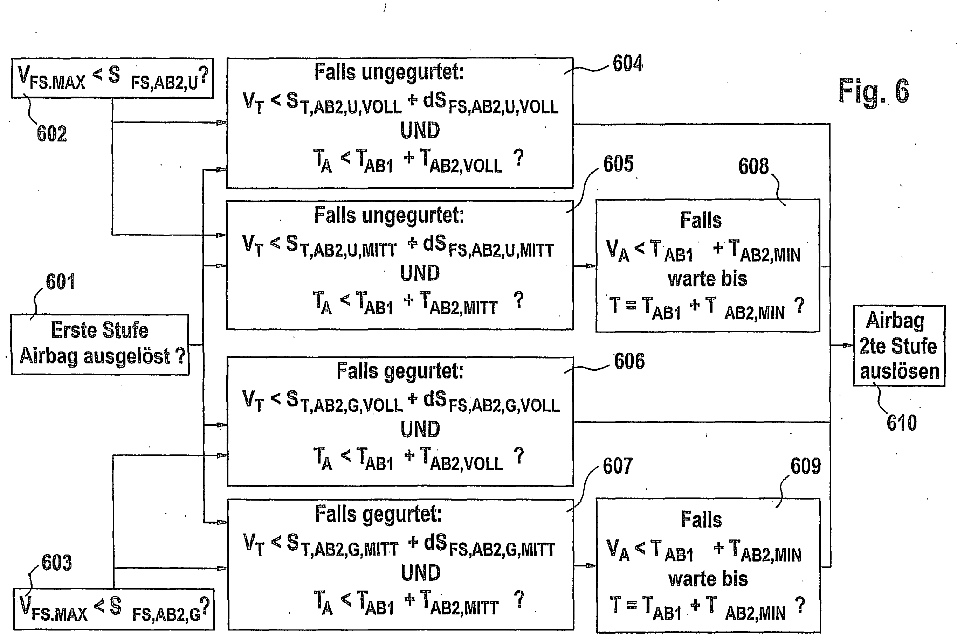

In einer anderen Variante, schematisch in Figur 6 dargestellt, gibt es für den Fall von nicht angegurteten Insassen zwei Auslöseschwellen S_{T,AB2,U,VOLL} und S_{T,AB2,U,MITT}. Falls die auf dem Tunnel bestimmte Geschwindigkeit V_{T} die Schwelle S_{T,AB2,U,VOLL} bis zu einer minimalen Verzögerungszeit T_{AB,voll} typischerweise 5 msec nach der Entscheidung zur Auslösung der ersten Stufe unterschreitet, so wird auf eine Auslösung der zweiten Gasgeneratorstufe entschieden, und zwar zum Zeitpunkt der Unterschreitung. Unterschreitet die auf dem Tunnel bestimmte Geschwindigkeit V_{T} die Schwelle S_{T,AB2,U,MITT} bis zu einer maximalen einstellbaren Verzögerungszeit T_{AB2} mit typischerweise 20 bis 50 ms nach der Entscheidung zur Auslösung der ersten Stufe, so wird auf eine Auslösung der zweiten Stufe zum Zeitpunkt der Entscheidung frühestens nach einer zweiten einstellbaren Verzögerungszeit nach Auslösung der ersten Stufe T_{AB2,min} typischerweise 20 ms entschieden. Falls diese maximale Verzögerungszeit überschritten wird, so wird die zweite Stufe nicht mehr vom Unfallerkennungsalgorithmus ausgelöst. Im Fall von angegurteten Insassen bleibt das Verfahren das selbe mit entsprechenden Schwellen.

Um die Steuerung der zweiten Gasgeneratorstufe zu verbessern, kann wiederum die mittels der Frontsensoren bestimmte Geschwindigkeit V_{FS,L} und V_{FS,R} benutzt werden. Das Maximum V_{FS,max} der beiden Geschwindigkeiten V_{FS,L} und V_{FS,R} wird wiederum mit zeitabhängigen einstellbaren Schwellen S_{FS,AB2,U}, S_{FS,AB2,G} verglichen. Unterscheidet die maximale Frontsensorgeschwindigkeit V_{FS,max} die Schwellen S_{FS,AB2,U} und S_{FS,AB2,G}, so werden die dazugehörigen Schwellen S_{T,AB2,U,VOLL}, S_{T,AB2,U,MITT} bzw. S_{T,AB2,G,VOLL}, S_{T,AB2,G,MITT} um bestimmte einstellbare Beträge dS_{FS,AB2,U,voll} und dS_{FS,AB2,U,mitt} bzw. dS_{FS,AB2,G,voll} und dS_{FS,AB2,G,mitt} erhöht. Auf diese Weise wird die Auslösung der zugehörigen Rückhaltemittel erleichtert.

In Figur 6 zeigt 601 den Block, in dem auf die Auslösung der ersten Stufe erkannt wurde. Die Blöcke 602 und 603 erkennen für die Frontsensoren auf Unterschreitung der Schwelle im gegurteten bzw. ungegurteten Fall. Falls die Frontsensor-Schwellen unterschritten werden, so werden in den Blöcken 604, 605, 606, 607 die Schwellwerte verändert. Im Block 604 wird für den ungegurteten Fall der Schwellwertvergleich durchgeführt und die Zeitbedingung für die frühe Auslösung der zweiten Stufe überprüft. Wurde die Zeitbedingung eingehalten und der Schwellwert unterschritten, dann wird zu Block 610 gesprungen, um die zweite Stufe auszulösen. In Block 605 wird der Schwellenvergleich durchgeführt und die Zeitbedingung überprüft für den Fall der verzögerten Auslösung. Wurde die Zeitbedingung eingehalten und der Schwellwert unterschritten, dann wird zu Block 608 gesprungen und geprüft, ob die minimale Wartezeit abgelaufen ist und, falls dies noch nicht der Fall ist gewartet bis zu deren Ablauf. Dann wird in Block 610 gesprungen um die zweite Stufe auszulösen. Im Block 606 wird für den gegurteten Fall der Schwellwertvergleich durchgeführt und die Zeitbedingung für die frühe Auslösung der zweiten Stufe überprüft. Wurde die Zeitbedingung eingehalten und der Schwellwert unterschritten, dann wird zu Block 610 gesprungen, um die zweite Stufe auszulösen. In Block 607 wird der Schwellenvergleich durchgeführt und die Zeitbedingung überprüft für den Fall der verzögerten Auslösung im gegurteten Fall. Wurde die Zeitbedingung eingehalten und der Schwellwert unterschritten, dann wird zu Block 609 gesprungen und geprüft, ob die minimale Wartezeit abgelaufen ist und, falls dies noch nicht der Fall ist gewartet bis zu deren Ablauf. Dann wird in Block 610 gesprungen um die zweite Stufe auszulösen.

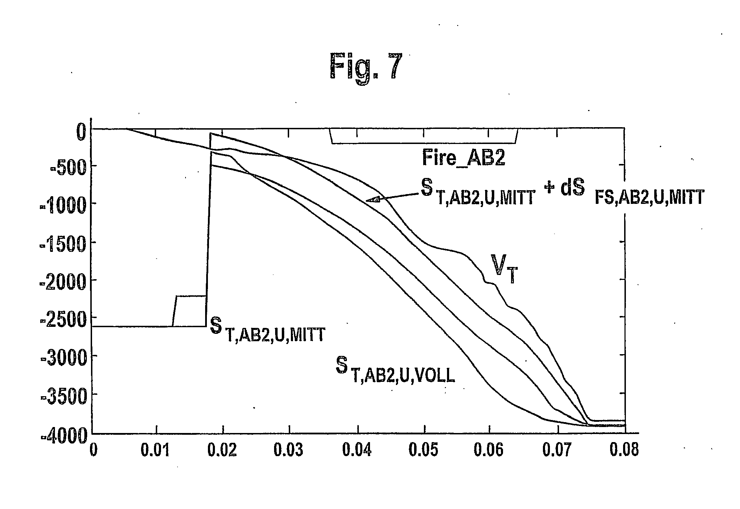

Ein Beispiel für Geschwindigkeit und Schwellen für die oben beschriebene zweite Variante der Steuerung der zweiten Gasgeneratorstufe ist in Figur 7 für einen 64-km/h-Offsetunfallversuch gegen eine deformierbare Barriere für den Fall eines nicht angegurteten Insassen gezeigt. Die Auslösezeit der ersten Generatorstufe in diesem Beispiel ist etwa 18 ms nach Beginn des Unfalls. Die Schwelle S_{T,AB2,U,VOLL} wird in diesem Beispiel nicht durch Frontsensoren verändert, die Schwelle S_{T,AB2,U,MITT} wird etwa 12 ms nach Beginn des Unfalls durch Frontsensoren verändert und erhöht so S_{T,AB2,U,MITT} plus dS_{FS,AB2,U,mitt}. Die Geschwindigkeit V_{T} überschreitet die Schwelle S_{T,AB2,U,VOLL}, nicht dagegen aber bei ca. 18 ms S_{T,AB2,U,MITT} plus dS_{FS,AB2,U,mitt}. Die Entscheidung zur Auslösung der zweiten Stufe wird in diesem Fall bei 18 ms nach Beginn des Unfalls getroffen. Die Auslösung der zweiten Stufe erfolgt in diesem Fall jedoch erst nach 20 ms nach Auslösen der ersten Stufe, also bei 38 ms. Dies ist ersichtlich durch das Auslöseflag Fire_AB2, das bei 38 ms gesetzt wird.

In einer anderen Variante zur Steuerung der zweiten Gasgeneratorstufe wird anstelle der Geschwindigkeit V_{T} auf dem Tunnel die Differenz der Geschwindigkeiten V_{T} - V_{FS,max} berechnet und mit den Schwellen, wie oben beschrieben, verglichen.

In einer wieder anderen Variante wird anstelle der Geschwindigkeit V_{T} auf dem Tunnel die mittels Tiefpassfilter gefilterte Beschleunigung berechnet und, wie oben beschrieben, mit den Schwellen verglichen. Ebenso wird die Beschleunigung der Frontsensoren mit einem Tiefpassfilter gefiltert und wie oben beschrieben mit den Schwellen verglichen. Die Filterfrequenz des Tiefpassfilters ist je nach Einbauart einstellbar und wird so gewählt, dass ein geschwindigkeitsähnliches Signal erzeugt wird. Dazu wird eine niedrige Filterfrequenz in der Größenordnung von bis zu 120 Hz bzw. 100 Hz gewählt.

In einer anderen Variante zur Steuerung der zweiten Gasgeneratorstufen wird, wie oben beschrieben, die Geschwindigkeit V_{T} auf dem Tunnel mit Schwellen verglichen, um die zweite Gasgeneratorstufe zu steuern. Parallel dazu wird auf dem Tunnel die mittels Tiefpassfilter gefilterte Beschleunigung berechnet und wie oben beschrieben mit zeitabhängigen Schwellen verglichen. Die Entscheidung von beiden Zweigen wird mittels logischem ODER verbunden und zur Steuerung der zweiten Stufe benutzt.

## Patentansprüche

1. Anordnung zum Ansteuern von Rückhaltemitteln, wobei die Anordnung ein im Fahrzeug zentral angeordnetes Steuergerät (4) mit wenigstens einem Beschleunigungssensor und wenigstens einem Upfrontsensor (2, 3) aufweist, wobei das Steuergerät (4) derart konfiguriert ist, dass das Steuergerät (4) die Rückhaltemittel ansteuert, wenn jeweilige abgeleitete Signale des wenigstens einen Beschleunigungssensors und des wenigstens einen Upfrontsensors (2, 3) jeweilige Schwellen (S) überschreiten, wobei das Steuergerät die jeweiligen Schwellen in Abhängigkeit vom Signal des wenigstens einen Upfrontsensors (2, 3) ändert, **dadurch gekennzeichnet, dass** die jeweiligen Schwellen zeitabhängig ausgebildet sind.

2. Anordnung nach Anspruch 1, **dadurch gekennzeichnet, dass** das Steuergerät (4) derart konfiguriert ist, dass das Steuergerät (4) jeweilige Geschwindigkeitssignale von den Signalen des wenigstens einen Beschleunigungssensors und wenigstens einen Upfrontsensors (2, 3) für den Vergleich mit den jeweiligen Schwellen (S) bildet.

3. Anordnung nach Anspruch 1 oder 2, **dadurch gekennzeichnet, dass** die Anordnung zur Ansteuerung von wenigstens einem zweistufigen Rückhaltemittel ausgebildet ist.

4. Anordnung nach Anspruch 1, **dadurch gekennzeichnet, dass** die Anordnung derart konfiguriert ist, dass die Anordnung die Beschleunigungssignale mit einer Grenzfrequenz von 100 Hz zur Bildung geschwindigkeitsähnlicher Signale tiefpassfiltert.

## Claims

1. Arrangement for triggering restraining means, the arrangement having a control device (4), arranged centrally in the vehicle, with at least one acceleration sensor and at least one upfront sensor (2, 3), the control device (4) being configured in such a way that the control device (4) triggers the restraining means when the respective derived signals of the at least one acceleration sensor and of the at least one upfront sensor (2, 3) exceed respective thresholds (S), the control device changing the respective thresholds as a function of the signal of the at least one upfront sensor (2, 3), **characterized in that** the respective thresholds are formed as a function of time.

2. Arrangement according to Claim 1, **characterized in that** the control device (4) is configured in such a way that the control device (4) forms respective speed signals from the signals of the at least one acceleration sensor and at least one upfront sensor (2, 3) for comparison with the respective thresholds (S).

3. Arrangement according to Claim 1 or 2, **characterized in that** the arrangement is designed for triggering at least one two-stage restraining means.

4. Arrangement according to Claim 1, **characterized in that** the arrangement is configured in such a way that the arrangement subjects the acceleration signals to lowpass filtering with a cutoff frequency of 100 Hz in order to form speed-like signals.

## Revendications

1. Dispositif permettant de commander des moyens de retenue, avec un appareil de commande (4) au centre du véhicule, ayant au moins un capteur d'accélération et au moins un capteur frontal (2, 3), l'appareil de commande (4) étant configuré pour commander les moyens de retenue lorsque certains signaux dérivés de l'au moins un capteur d'accélération et de l'au moins un capteur frontal (2, 3) dépassent des seuils (S) respectifs, l'appareil de commande modifiant les seuils respectifs en fonction du signal du capteur frontal (2, 3),
**caractérisé en ce que**
les seuils respectifs dépendent du temps.

2. Dispositif selon la revendication 1,
**caractérisé en ce que**
l'appareil de commande (4) est configuré pour former à partir des signaux du capteur d'accélération et du capteur frontal (2, 3), chaque fois des signaux de vitesse pour les comparer aux les seuils respectifs (S).

3. Dispositif selon la revendication 1 ou 2,
**caractérisé en ce qu'**
il commande au moins un moyen de retenue biétagé.

4. Dispositif selon la revendication 1,
**caractérisé en ce qu'**
il est configuré en filtre passe-bas des signaux d'accélération à une fréquence limite de 100 Hz, pour former des signaux similaires de vitesse.
